# DEMANDE DE BREVET EUROPEEN

(11) **EP 4 102 163 A1**
(43) Date de publication de la demande: **14.12.2022**
(21) Numéro de dépôt: 22178072.9
(22) Date de dépôt: 09.06.2022
(51) Int. Cl.: F25J 1/00

(54) **PROCÉDÉ DE RÉCUPÉRATION D'UN COURANT DE CO2 LIQUÉFIÉ À PARTIR D'UN GAZ RÉSIDUEL INDUSTRIEL ET INSTALLATION ASSOCIÉE**

(30) Priorité: 09.06.2021 EP 21305787
(71) Demandeur: Technip Energies France, 92741 Nanterre Cedex (FR)
(72) Inventeur: MATHIEU, Vincent, 92400 COURBEVOIE (FR); JACQUES, Manuel, 92400 COURBEVOIE (FR); BOULLET, Antoine, 92400 COURBEVOIE (FR)
(74) Mandataire: Lavoix

(57) **Abrégé**

Ce procédé comprend l'introduction d'un gaz résiduel (16) dans une unité de captage (22) de dioxyde de carbone pour former un flux gazeux (36) et le comprimer ; le séchage du flux gazeux comprimé (56) ; le refroidissement du flux gazeux sec (62) ; la détente partielle du flux liquéfié et sous-refroidi (30), et l'introduction du flux détendu (78) dans une colonne de détente (34) pour former un flux de tête gazeux (80) et le courant (12) de dioxyde de carbone liquéfié, dans lequel une partie (86) du flux de tête gazeux (80) est injectée dans le gaz résiduel (16) industriel, et une deuxième partie (88) est injectée dans le flux gazeux (36), et en ce qu'une partie (90) du flux détendu (78) forme un flux rebouilli (91) dans la colonne de détente (34).

## Description

La présente invention concerne un procédé de récupération d'un courant de dioxyde de carbone liquéfié à partir d'un gaz résiduel industriel, comprenant les étapes suivantes :
- introduction du gaz résiduel industriel dans une unité de captage de dioxyde de carbone pour former un flux gazeux riche en dioxyde de carbone et un courant d'effluent pauvre en dioxyde de carbone ;
- compression du flux gazeux dans un ou plusieurs étage(s) de compression pour former un flux gazeux comprimé ;
- séchage du flux gazeux comprimé pour former un flux gazeux sec ;
- refroidissement, liquéfaction et sous-refroidissement du flux gazeux sec pour former un flux liquéfié et sous-refroidi,
- détente partielle du flux liquéfié et sous-refroidi pour former un flux détendu comprenant une fraction liquide et une fraction gazeuse,
- introduction du flux détendu dans une colonne de détente pour former un flux de tête gazeux et récupérer, en pied de colonne, le courant de dioxyde de carbone liquéfié.

Un tel procédé est destiné à mettre mis en œuvre dans une unité de récupération de gaz résiduels industriels.

De manière connue, les gaz industriels se présentent sous la forme de mélanges de dioxyde de carbone CO₂, de dioxygène O₂, de dihydrogène H₂, de diazote N₂, de vapeurs d'eau H₂O et diverses impuretés comme des oxydes d'azote (NOx), des oxydes de soufre (SOx), du monoxyde de carbone CO ou encore du sulfure d'hydrogène H₂S, leurs proportions variant selon le type d'installation industrielle dont ils proviennent.

Parmi eux, le dioxyde de carbone CO₂ est l'un des principaux gaz à effet de serre, dont les rejets dans l'atmosphère sont responsables du réchauffement climatique. Afin de réduire l'impact environnemental des industries, il est donc nécessaire de réduire au maximum les rejets de dioxyde de carbone industriel dans l'atmosphère.

Une technique connue consiste à capter le dioxyde de carbone émis au niveau des installations industrielles de manière à le transporter vers un site géologique pour y être stocké, notamment par enfouissement dans les sols. On parle alors de séquestration ou encore piégeage du dioxyde de carbone.

La récupération du dioxyde de carbone présent dans les gaz résiduels industriels, en vue de sa séquestration, représente ainsi aujourd'hui une problématique importante des acteurs industriels cherchant à réduire leur impact environnemental. De manière plus globale, la séquestration du dioxyde de carbone industriel apparait comme essentielle pour atteindre les engagements climatiques et énergétiques fixés par les différents accords nationaux et internationaux.

Le dioxyde de carbone présent dans les gaz industriels est tout d'abord purifié, puis comprimé et liquéfié afin d'être transporté.

L'une des étapes clés de sa récupération est la désoxygénation du gaz visant à éliminer le dioxygène présent dans les effluents industriels. Une teneur en dioxygène O₂ typiquement inférieure ou égale à 100 ppm molaire est en effet nécessaire pour éviter la formation d'espèces corrosives qui endommageraient les équipements de stockage et/ou de transport.

L'élimination du dioxygène se fait généralement dans un réacteur dit de désoxygénation dans lequel le dioxygène est transformé en eau par réaction avec du dihydrogène H₂, en présence d'un catalyseur. L'eau générée est ensuite éliminée dans une unité de séchage.

Un réacteur de désoxygénation représente toutefois un investissement financier important. De plus, son fonctionnement nécessite l'apport régulier de dihydrogène qui génère des coûts de stockage mais aussi de production sur place ou d'achat. La présence dans les effluents à traiter de contaminants soufrés est par ailleurs susceptible de détériorer le catalyseur. Un lit de garde est alors nécessaire pour protéger le catalyseur, ce qui entraine des coûts supplémentaires d'investissement et d'exploitation. Enfin, l'utilisation de dihydrogène sous pression présente des risques de sécurité qui nécessitent l'utilisation d'équipements particuliers par le personnel ainsi que la mise en place de procédures visant à garantir la sécurité de l'exploitation.

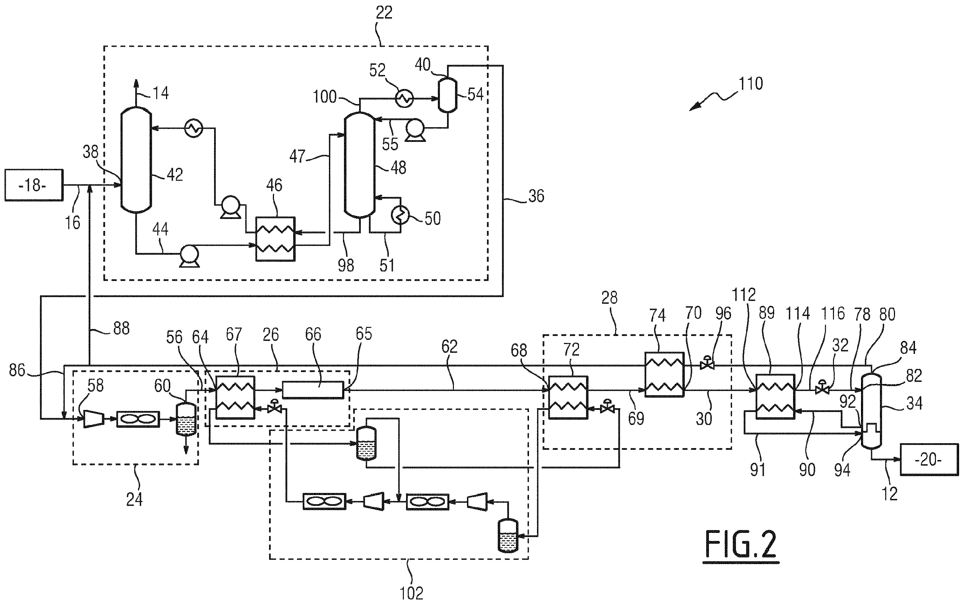

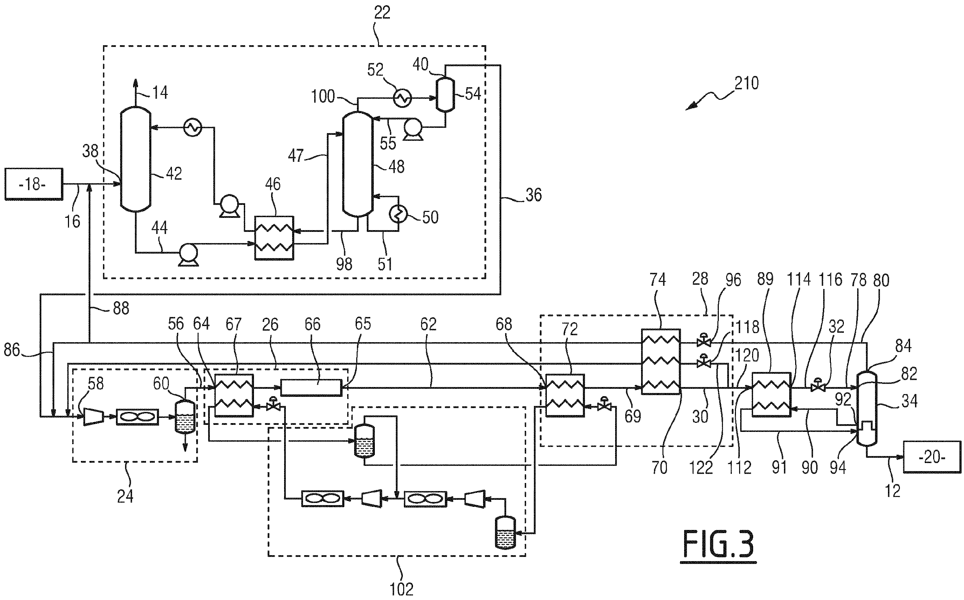

FR 3 016 436 enseigne un procédé de liquéfaction d'un courant de CO₂ gazeux dans lequel des impuretés comme du dihydrogène ou du diazote sont éliminées par détente partielle du gaz liquéfié. L'installation décrite à la figure 2 ne permet pas le traitement d'effluents riches en dioxygène. L'installation décrite à la figure 3 comprend des équipements supplémentaires dont les coûts d'installation sont importants. De plus, une partie du dioxyde de carbone est relâchée dans l'atmosphère, limitant ainsi le taux de récupération du dioxyde de carbone.

CN209828305 décrit une tour de rectification pour purifier du dioxyde de carbone. Le flux de tête gazeux riche en impuretés est envoyé dans un condenseur afin de récupérer une partie du CO₂ évaporé. L'installation nécessite toutefois des coûts d'investissement et d'exploitation importants, notamment pour condenser les vapeurs en tête de colonne de rectification. De plus, une partie du dioxyde de carbone non condensé est relâché dans l'atmosphère.

KR101153080 décrit un procédé de liquéfaction de dioxyde de carbone par détente partielle du gaz liquéfié. L'intégralité du flux de tête gazeux est recyclée dans les effluents à traiter. Ce procédé n'est toutefois pas adapté au traitement d'effluents riches en dioxygène. En effet, l'accumulation du dioxygène dans l'installation aurait pour conséquence une montée en pression de l'installation.

Un but de l'invention est d'obtenir un procédé récupérant de manière très efficace et fiable le dioxyde de carbone présent dans les gaz résiduels industriels, tout en limitant les coûts d'investissement et d'exploitation du procédé.

En particulier, le but de l'invention est de fournir un procédé adapté aux traitements d'effluents industriels présentant une teneur en impuretés élevée, notamment en dioxygène.

A cet effet, l'invention a pour objet un procédé dans lequel une première partie du flux de tête gazeux est injectée dans le gaz résiduel industriel, avant son introduction dans l'unité de captage, et dans lequel une deuxième partie du flux de tête gazeux est injectée dans le flux gazeux riche en dioxyde de carbone, en amont de l'un des étages de compression, et dans lequel au moins une partie de la fraction liquide du flux détendu est chauffée pour former un flux rebouilli, ledit flux rebouilli étant ensuite injecté dans la colonne de détente.

En particulier, le procédé de l'invention comprend une étape au cours de laquelle un courant liquide est soutiré en pied de la colonne de détente et chauffé pour former le flux rebouilli, ledit flux rebouilli étant ensuite injecté dans la colonne de détente.

Le procédé selon l'invention peut comprendre l'une ou plusieurs des caractéristiques suivantes, prise(s) isolément ou suivant toute combinaison techniquement possible :
- le gaz résiduel industriel contient moins de 50 % en masse, de préférence moins de 40 % en masse, plus préférentiellement de 2 à 30% en masse, de dioxyde de carbone ;
- le flux gazeux riche en dioxyde de carbone présente une teneur massique en dioxyde de carbone supérieure à 90% en masse, de préférence supérieure à 95% en masse ;
- la première partie du flux de tête gazeux représente au moins 50%, de préférence de 70 % à 95 %, du flux de tête gazeux ;
- au moins une partie de la fraction liquide du flux détendu, notamment le courant liquide soutiré en pied de la colonne de détente, est chauffé(e) par échange thermique avec le flux liquéfié et sous-refroidi ;
- avant l'étape de détente partielle, le flux liquéfié et sous-refroidi est séparé en un premier sous-flux et un second sous-flux, le premier sous-flux étant ensuite partiellement détendu et introduit dans la colonne de détente et le second sous-flux étant placé en relation d'échange thermique avec le flux gazeux sec ;
- le flux de tête gazeux est placé en relation d'échange thermique avec le flux gazeux sec ;
- le flux de tête gazeux est mélangé avec le second sous-flux pour former un flux commun, le flux commun étant ensuite placé en relation d'échange thermique avec le flux gazeux sec et/ou avec le flux gazeux comprimé, ledit flux commun étant ensuite divisé en une première partie qui est injectée dans le flux gazeux, en amont de l'un des étages de compression, et une deuxième partie qui est injectée dans le courant résiduel industriel ;
- le procédé est dépourvu d'une étape de désoxygénation catalytique, notamment entre l'étape de compression et l'étape de séchage ;
- au niveau de l'unité de captage, le gaz résiduel industriel est mis en contact avec un solvant apte à absorber le dioxyde de carbone ;
- la deuxième partie du flux de tête gazeux présente une teneur en dioxygène O2 de 0,1 à 1% en masse.

L'invention a également pour objet une installation de récupération d'un courant de dioxyde de carbone liquéfié à partir d'un gaz résiduel industriel, comprenant :
- une unité de captage de dioxyde de carbone destinée à former un flux gazeux riche en dioxyde de carbone et un courant d'effluent pauvre en dioxyde de carbone, l'unité de captage comportant une entrée d'introduction du gaz résiduel industriel,
- une unité de compression destinée à former un flux gazeux comprimé comprenant une entrée d'introduction du flux gazeux riche en dioxyde de carbone,
- une unité de séchage destinée à former un flux gazeux sec, comprenant une entrée d'introduction du flux gazeux comprimé,
- une unité de refroidissement et de liquéfaction destinée à refroidir, liquéfier et sous-refroidir le flux gazeux sec pour former un flux liquéfié et sous-refroidi, l'unité de refroidissement et de liquéfaction comprenant une entrée d'introduction du flux gazeux sec,
- une vanne destinée à détendre partiellement le flux liquéfié et sous-refroidi pour former un flux détendu comprenant une fraction liquide et une fraction gazeuse,
- une colonne de détente destinée à former un flux de tête gazeux et, en pied de colonne, le courant de dioxyde de carbone liquéfié, la colonne de détente comprenant une entrée d'introduction du flux détendu et une sortie de récupération du flux de tête gazeux,
   dans laquelle la sortie de la colonne de détente est reliée à l'entrée de l'unité de captage de dioxyde de carbone et à l'entrée de l'unité de compression de sorte qu'une première partie du flux de tête gazeux soit injectée dans le flux gazeux riche en dioxyde de carbone et qu'une seconde partie du flux de tête gazeux soit injectée dans le gaz résiduel industriel, et en ce que la colonne de détente est reliée à un septième échangeur thermique destiné à former un flux rebouilli.

L'installation selon l'invention peut également être telle que le septième échangeur thermique comprend en outre une entrée d'introduction du flux liquéfié et sous-refroidi et une sortie de récupération reliée à la vanne, de sorte que le flux liquéfié et sous-refroidi subisse une étape de refroidissement supplémentaire par échange thermique avec le flux rebouilli.

L'invention sera mieux comprise à la lecture de la description qui va suivre, donnée uniquement à titre d'exemple, et faite en se référant aux dessins annexés, sur lesquels :
La figure 1 est un schéma synoptique représentant une première installation destinée à la mise en œuvre d'un procédé selon l'invention.
La figure 2 est un schéma synoptique représentant une deuxième installation destinée à la mise en œuvre d'un procédé selon l'invention.
La figure 3 est un schéma synoptique représentant une troisième installation destinée à la mise en œuvre d'un procédé selon l'invention.
La figure 4 est un schéma synoptique représentant une quatrième installation destinée à la mise en œuvre d'un procédé selon l'invention.
La figure 5 est un schéma synoptique représentant une cinquième installation destinée à la mise en œuvre d'un procédé selon l'invention.

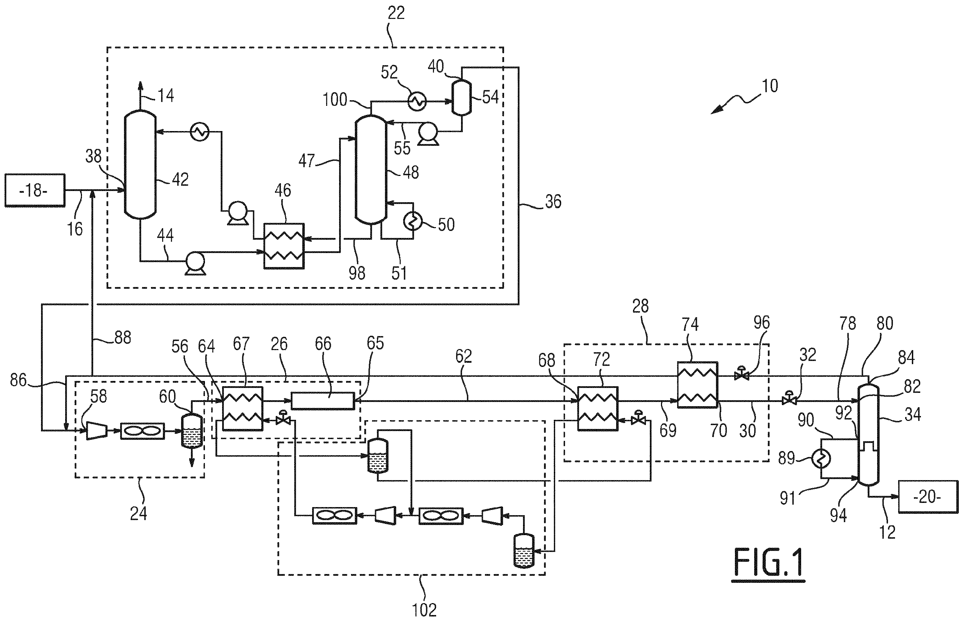

Une installation 10 selon un premier mode de réalisation de l'invention est illustrée schématiquement sur la figure 1.

L'installation 10 est destinée à la récupération d'un courant 12 de dioxyde de carbone CO₂ liquéfié, et d'un courant 14 d'effluent à partir d'un gaz résiduel 16 industriel par un procédé selon l'invention.

L'installation 10 est raccordée en amont à une installation industrielle 18 produisant le gaz résiduel 16 industriel brut. L'installation 10 est raccordée en aval à une installation 20 de transport et/ou de séquestration de dioxyde de carbone.

L'installation industrielle 18 consiste par exemple en un incinérateur, une centrale électrique ou encore une cimenterie.

L'installation 10 comporte une unité de captage 22 de dioxyde de carbone destinée à extraire le dioxyde de carbone présent dans le gaz résiduel 16 industriel, une unité de compression 24, une unité de séchage 26 et une unité de refroidissement et de liquéfaction 28 destinée à produire un flux liquéfié et sous-refroidi 30.

L'installation 10 comporte en outre un organe de détente, ici une vanne 32 destinée à détendre partiellement le flux liquéfié et sous-refroidi 30 et une colonne de détente 34.

L'unité de captage 22 de dioxyde de carbone est destinée à former un flux gazeux 36 riche en dioxyde de carbone et le courant 14 d'effluent pauvre en dioxyde de carbone.

L'unité de captage 22 comporte une entrée 38 d'introduction du gaz résiduel 16 industriel et une sortie 40 de récupération du flux gazeux 36 riche en dioxyde de carbone.

L'unité de captage 22 comprend un absorbeur 42 destiné à extraire le dioxyde de carbone présent dans le gaz résiduel 16 industriel de manière à former en tête de l'absorbeur 42 le courant 14 d'effluent pauvre en dioxyde de carbone et, un flux de pied liquide 44 riche en dioxyde de carbone.

L'unité de captage 22 comprend également un premier échangeur thermique 46 destiné à chauffer le flux 44 pour former un flux réchauffé 47.

L'unité de captage 22 comprend également un régénérateur 48 relié au premier échangeur thermique 46. Le régénérateur 48 est destiné à extraire sous forme gazeuse le dioxyde de carbone contenu dans le flux réchauffé 47, récupéré en sortie de l'échangeur thermique 46.

Avantageusement, la partie inférieure du régénérateur 48 est reliée à un second échangeur thermique 50 destiné à rebouillir un courant liquide 51 prélevé en fond de régénérateur 48.

La partie supérieure du régénérateur 48 est reliée à un troisième échangeur thermique 52, lui-même relié à un séparateur de phases 54. L'ensemble du troisième échangeur thermique 52 et du séparateur de phases 54 est destiné à former d'une part, en tête du séparateur de phases 54, le flux gazeux 36 riche en dioxyde de carbone, et d'autre part, en fond du séparateur de phases 54, un courant de reflux 55 injecté en tête du régénérateur 48.

L'unité de compression 24 est destinée à former un flux gazeux comprimé 56 à partir du flux gazeux 36 riche en dioxyde de carbone.

L'unité de compression 24 comporte une entrée 58 d'introduction du flux gazeux 36 et une sortie 60 de récupération du flux gazeux comprimé 56.

L'unité de compression 24 comprend un ou plusieurs étages de compression, de préférence au moins 3 étages de compression.

Chaque étage de compression comporte au moins un compresseur, au moins un échangeur thermique destiné à réduire la température du flux comprimé pour créer une fraction liquide et une fraction gazeuse, au moins un ballon d'éclatement destiné à séparer la fraction liquide de la fraction gazeuse, après le refroidissement. Les fractions liquides sont extraites de l'installation 10. La fraction gazeuse finale constitue le flux gazeux comprimé 56.

L'unité de séchage 26 est destinée à former un flux gazeux sec 62 à partir du flux gazeux comprimé 56.

L'unité de séchage 26 comporte une entrée 64 d'introduction du flux gazeux comprimé 56 et une sortie 65 de récupération du flux gazeux sec 62.

L'unité de séchage 26 comprend un module de séchage 66.

Les modules de séchage sont bien connus de l'homme du métier et ne seront donc pas davantage détaillés ici.

Selon l'invention, l'unité de séchage 26 comprend en outre, entre l'entrée 64 et le module de séchage 66, un quatrième échangeur thermique 67 destiné à pré-refroidir le flux gazeux comprimé 56.

L'unité de refroidissement et de liquéfaction 28 est destinée à refroidir, liquéfier et sous-refroidir le flux gazeux sec 62 pour former le flux liquéfié et sous-refroidi 30.

L'unité de refroidissement et de liquéfaction 28 comporte une entrée 68 d'introduction du flux gazeux sec 62 et une sortie 70 de récupération du flux liquéfié et sous-refroidi 30.

L'unité de refroidissement et de liquéfaction 28 est constituée d'une série d'échangeurs thermiques alimentés en série afin de refroidir, liquéfier et sous-refroidir progressivement le flux gazeux sec 62.

Dans l'installation représentée sur la figure 1, l'unité de refroidissement et de liquéfaction 28 comprend deux échangeurs thermiques 72 et 74.

Le cinquième échangeur 72 est destiné à être alimenté avec le flux gazeux sec 62 et à former, en sortie, un flux intermédiaire liquéfié 69.

Le sixième échangeur 74 est destiné à être alimenté avec le flux intermédiaire liquéfié 69 et à former, en sortie, le flux liquéfié et sous-refroidi 30.

La vanne 32 est destinée à détendre partiellement le flux liquéfié et sous-refroidi 30 de manière à former un flux détendu 78 comprenant une fraction liquide et une fraction gazeuse.

La colonne de détente 34 est destinée à séparer la fraction liquide et la fraction gazeuse du flux détendu 78 en formant un flux de tête gazeux 80, et en pied de colonne, le courant 12 de dioxyde de carbone CO₂ liquéfié.

La colonne de détente 34 comporte une entrée 82 d'introduction du flux détendu 78 et une sortie 84 de récupération du flux de tête gazeux 80.

La sortie de récupération 84 du flux de tête gazeux 80 est reliée à l'entrée 58 de l'unité de compression 24 de sorte qu'une première partie 86 du flux de tête gazeux 80 est injectée dans le flux gazeux 36 riche en dioxyde de carbone, en amont de l'un des étages de compression.

Lorsque l'unité de compression 24 comprend plusieurs étages de compression, la sortie de récupération 84 est reliée à l'entrée de l'un des étages de compression. La première partie 86 du flux de tête de gazeux peut ainsi être injectée en amont de tous les étages de compression ou entre deux étages de compression successifs.

La sortie de récupération 84 du flux de tête gazeux 80 est également reliée à l'entrée 38 de l'unité de captage 22 de sorte qu'une deuxième partie 88 du flux de tête gazeux 80 soit injectée dans le courant résiduel industriel 16.

La partie inférieure de la colonne de détente 34 est par ailleurs reliée à un septième échangeur thermique 89 destiné à rebouillir un courant liquide 90 prélevé en fond de la colonne de détente 34. Un flux rebouilli 91 est ainsi récupéré en sortie du septième échangeur thermique 89, avant d'être injecté dans la partie inférieure de la colonne de détente 34.

La colonne de détente 34 comporte ainsi une sortie 92 de récupération du courant liquide 90 destiné à être rebouilli dans le septième échangeur thermique 89 et une entrée 94 d'introduction du flux rebouilli 91 dans la colonne de détente 34.

Avantageusement, l'installation 10 comprend en outre une vanne 96 destinée à détendre partiellement le flux de tête gazeux 80.

De préférence, la vanne 96 est reliée au sixième échangeur thermique 74 de sorte que le flux de tête gazeux 80 partiellement détendu y soit réchauffé par échange thermique avec le flux intermédiaire liquéfié 69.

Dans tout ce qui suit, les pressions sont exprimées en bars relatifs.

Les courants décrits dans l'installation sont confondus avec les conduites qui les transportent.

La mise en œuvre d'un premier procédé selon l'invention va maintenant être décrite.

Initialement, au moins un gaz résiduel 16 industriel issu de l'installation industrielle 18 est récupéré. Le gaz résiduel 16 industriel comprend typiquement moins de 50% en masse de dioxyde de carbone, de préférence moins de 40% en masse, plus préférentiellement de 2 à 30% en masse. Le gaz résiduel 16 industriel comprend également typiquement entre 2 % massique et 10% massique de dioxygène, le reste étant constitué d'impuretés (H₂, NOx, SOx, CO, H₂S, ...), de diazote N₂ et d'eau H₂O.

De préférence, le gaz résiduel 16 industriel présente une pression inférieure à 15 bars relatifs, plus préférentiellement comprise entre 0 bars relatifs et 15 bars relatifs, avantageusement comprise entre 0 bars relatifs et 10 bars relatifs, plus avantageusement comprise entre 0 bars relatifs et 8 bars relatifs, typiquement comprise entre 0 bars relatifs et 5 bars relatifs.

Avantageusement, le gaz résiduel 16 industriel présente une pression comprise entre 0 bars relatifs et 2 bars relatifs.

Le gaz résiduel 16 industriel est introduit dans l'unité de captage 22 de dioxyde de carbone pour être y séparé en, d'une part le flux gazeux 36 riche en dioxyde de carbone, et d'autre part le courant 14 d'effluent pauvre en dioxyde de carbone.

Pour cela, le gaz résiduel 16 industriel est tout d'abord introduit dans l'absorbeur 42 à travers l'entrée 38 d'introduction. A l'intérieur de l'absorbeur 42, le gaz résiduel 16 industriel est mis en contact avec un solvant apte à absorber le dioxyde de carbone.

Les procédés d'absorption chimique utilisant des solvants aptes à absorber du dioxyde de carbone (comme les solutions aminées, de carbonate de potassium ou de l'ammoniaque) sont bien connus de l'homme de métier et ne seront pas davantage décrits ici. A titre d'exemple de solutions aminées adaptées à l'invention, on peut notamment citer les solutions composées d'un ou de plusieurs des composés suivants : monoéthanolamine, diéthanolamine, N-méthyldiéthanolamine, pipérazine, 2-Amino-2-méthylpropan-1-ol, Bis(2-hydroxypropyl)amine, 1-méthylpipérazine, diméthylaminoéthanol.

Au contact du gaz résiduel industriel 16, le solvant absorbe le dioxyde de carbone présent dans le gaz résiduel industriel 16 pour former un flux de pied 44 constitué du solvant chargé en dioxyde de carbone, et en tête de l'absorbeur 42, le courant 14 d'effluent pauvre en dioxyde de carbone.

Le courant 14 d'effluent est ensuite transféré vers une autre installation de traitement ou est directement relâché dans l'atmosphère. Le courant 14 d'effluent comprend typiquement entre 0,02 % et 5% en volume de dioxyde de carbone CO₂.

De préférence, le courant 14 d'effluent présente une teneur en dioxygène allant de 0,5 % en volume à 12 % en volume, plus préférentiellement de 2 % en volume à 10 % en volume.

Le flux de pied 44 constitué du solvant chargé en dioxyde de carbone est ensuite acheminé dans le premier échangeur thermique 46 dans lequel il est chauffé à une température supérieure à 80°C, de préférence supérieure à 90°C, notamment proche de 100°C de manière à ce que le dioxyde de carbone absorbé par le solvant soit partiellement relâché sous forme gazeuse. Le flux réchauffé 47 récupéré en sortie du premier échangeur thermique 46 est diphasique et comprend une première fraction liquide comprenant le solvant chargé et une fraction gazeuse comprenant le dioxyde de carbone relâché.

Le flux réchauffé 47 est ensuite introduit dans le régénérateur 48. La fraction gazeuse du flux réchauffé 47 s'écoule alors dans la partie supérieure du régénérateur 48, tandis que la fraction liquide du flux réchauffé 47 s'écoule dans la partie inférieure du régénérateur 48.

Le courant liquide 51 prélevé en fond du régénérateur 48 est ensuite acheminé dans le second échangeur thermique 50 dans lequel il est chauffé de manière à extraire le dioxyde de carbone encore absorbé par le solvant. Le courant liquide 51 ainsi réchauffé est ensuite réintroduit dans le régénérateur 48 de sorte que le dioxyde de carbone libéré migre vers la partie supérieure du régénérateur 48.

Un flux liquide 98 constitué du solvant appauvri en dioxyde de carbone est récupéré au pied du régénérateur 48. Le flux liquide 98 est ensuite réinjecté dans l'absorbeur 42 pour y être recyclé.

De préférence, avant d'être réinjecté dans l'absorbeur 42, le flux liquide 98 est refroidi dans le premier échangeur 46 par échange thermique avec le flux de pied 44 provenant de l'absorbeur 42.

Le flux liquide 98 peut également subir une étape de refroidissement supplémentaire avant son injection dans l'absorbeur 42, par exemple par passage dans un échangeur thermique supplémentaire utilisant une source réfrigérante extérieure.

Un flux gazeux 100 constitué de la phase gazeuse extraite du flux réchauffé 47 est récupéré en tête du régénérateur 48.

Le flux gazeux 100 est ensuite acheminé dans le troisième échangeur thermique 52 pour y être partiellement condensé, puis dans le séparateur de phase 54 pour séparer le flux gazeux 36 riche en dioxyde de carbone des condensats.

Les condensats sont ensuite réintroduits dans le régénérateur 48 sous la forme du courant de reflux 55.

Le flux gazeux 36 présente une teneur en dioxyde de carbone supérieure ou égale à 90% massique, de préférence supérieure à 95 % massique, le reste étant constitué d'impuretés telles que du dioxygène, du diazote et de l'eau. Le flux gazeux 36 présente typiquement une teneur en dioxygène de 1 à 200 ppm massique. Le flux gazeux 36 présente typiquement une teneur en diazote de 10 à 1 000 ppm massique.

Le flux gazeux 36 est ensuite comprimé et refroidi pour former le flux gazeux comprimé 56 par passage dans l'unité de compression 24 dans laquelle il subit un ou plusieurs cycles de compression, condensation partielle et séparation de manière à éliminer la phase aqueuse liquide générée.

De préférence, le flux gazeux 36 subit au moins trois cycles successifs de compression, condensation et séparation.

Le flux gazeux 36 est ainsi comprimé jusqu'à une pression supérieure à 15 bars relatifs, avantageusement inférieure à 50 bars relatifs, et de préférence comprise entre 20 bars relatifs et 45 bars relatifs.

Le flux gazeux comprimé 56 récupéré en sortie 60 de l'unité de compression 24 présente typiquement une température de 20°C à 50°C.

Le flux gazeux comprimé 56 est ensuite séché par passage dans l'unité de séchage 26 pour former le flux gazeux sec 62.

De préférence, le flux gazeux comprimé 56 est préalablement refroidi à une température de 10°C à 50°C par passage dans le quatrième échangeur thermique 67. L'éventuelle phase liquide aqueuse formée est alors séparée et évacuée en dehors de l'installation 10.

De préférence, le flux gazeux comprimé 56 est refroidi dans le quatrième échangeur thermique 67 par échange thermique avec un fluide réfrigérant externe, de préférence choisi parmi l'ammoniac, le propane, l'éthylène, le diazote et le dioxyde de carbone.

Le flux gazeux comprimé 56, éventuellement pré-refroidi, est ensuite déshydraté par passage dans le module de séchage 66. Le fonctionnement des modules de séchage est bien connu de l'homme du métier et ne sera pas davantage décrit ici.

Le flux gazeux sec 62 présente typiquement une teneur en eau résiduelle inférieure à 500 ppm en volume, de préférence de 10 ppm en volume à 500 ppm en volume.

Le flux gazeux sec 62 est ensuite refroidi, condensé et sous-refroidi jusqu'à une température inférieure à 10°C, typiquement de -25°C à 10°C pour former le flux liquéfié et sous-refroidi 30.

Pour cela, le flux gazeux sec 62 est introduit dans l'unité de refroidissement et de liquéfaction 28 dans lequel il est refroidi progressivement par passage successif dans le cinquième échangeur 72 et le sixième échangeur 74.

De préférence, le flux gazeux déshydraté 62 est refroidi au niveau du cinquième échangeur thermique 72 par échange thermique avec un fluide réfrigérant externe, de préférence choisi parmi l'ammoniac, le propane, l'éthylène, le diazote et le dioxyde de carbone.

Selon un mode de réalisation avantageux, le flux gazeux 56 et le flux sec 62 sont refroidis par échange thermique avec un unique fluide réfrigérant externe circulant dans un cycle fermé de refroidissement 102. Le fluide réfrigérant externe subit alors des étapes successives de compression et de détente.

Le flux intermédiaire liquéfié 69, récupéré en sortie du cinquième échangeur thermique 72, est ensuite refroidi au niveau du sixième échangeur thermique 74 pour obtenir en sortie le flux liquéfié et sous-refroidi 30.

De préférence, le flux intermédiaire liquéfié 69 est refroidi par échange thermique avec le flux de tête 80 récupéré en sortie de la colonne de détente 34, plus préférentiellement avec le flux de tête 80 détendu récupéré en sortie de la vanne 96.

Le flux liquéfié et sous-refroidi 30 est ensuite détendu jusqu'à une pression inférieure à 25 bars relatifs, avantageusement supérieure à 5 bars relatifs, de préférence de 6 à 20 bars relatifs par passage à travers la vanne 32. Le flux détendu 78 comprend alors une fraction liquide et une fraction gazeuse.

Le flux détendu 78 est ensuite introduit dans la colonne de détente 34 au travers de l'entrée 82.

La fraction liquide du flux détendu 78 s'écoule dans la partie inférieure de la colonne de détente 34 tandis que la fraction gazeuse du flux détendu 78 s'écoule dans la partie supérieure de la colonne de détente.

Un courant liquide 90 est par ailleurs prélevé en pied de la colonne de détente 34 et est réchauffé dans le septième échangeur 89 de manière à former un flux rebouilli 91. Le flux rebouilli 91 est ensuite réintroduit dans la colonne de détente 34, de préférence au pied de la colonne de détente 34. Le rebouillage du courant liquide 90 permet ainsi de libérer sous forme gazeuse le dioxygène encore dissous dans le dioxyde de carbone liquéfié.

La température du flux rebouilli 91 est par exemple supérieure à -50°C, notamment comprise entre -50°C et -20°C

Le courant 12 de dioxyde de carbone liquéfié est ensuite récupéré en pied de la colonne de détente.

Le courant 12 de dioxyde de carbone liquéfié présente une teneur en dioxygène résiduel inférieure ou égale 100 ppm molaire, de préférence de 1 à 100 ppm molaire.

Le flux de tête gazeux 80 est composé à au moins 90% en masse de dioxyde de carbone, de préférence au moins 95% en masse. Le flux de tête gazeux 80 comprend en outre de 0,1 à 2% en masse de diazote et de 0,1 à 1% en masse de dioxygène.

Le flux de tête gazeux 80 présente, en sortie 84 de la colonne de détente 34, une pression inférieure à 25 bars relatifs, avantageusement supérieure à 5 bars relatifs, notamment comprise entre 6 bars relatifs et 20 bars relatifs ;

Le flux de tête gazeux 80 est ensuite réintroduit dans l'installation 10 afin d'y être recyclé.

Pour cela, le flux de tête 80 est tout d'abord détendu par passage dans la vanne 96.

De préférence, le flux de tête 80 est détendu jusqu'à une pression correspondant à la pression du flux gazeux 36 en amont de l'un des étages de compression de l'unité de compression 24. Plus préférentiellement, le flux de tête 80 est détendu jusqu'à une pression correspondant à celle du flux entrant dans l'étage de compression au niveau duquel la première partie 86 du flux de tête est injecté.

Le flux de tête gazeux 80 détendu est ensuite chauffé à une température supérieure à -25°C et notamment comprise entre -25°C et 15°C par échange thermique avec le flux intermédiaire liquéfié 69, au niveau du sixième échangeur 74.

Le flux de tête gazeux 80 est ensuite divisé en deux parties 86, 88.

La première partie 86 du flux de tête 80 est injectée dans le flux gazeux 36 riche en dioxyde de carbone, en amont de l'étage de compression adéquat de l'unité de compression 24.

Sur la figure 1, l'unité de compression 24 comprend un unique étage de compression. Dans ce cas, la première partie 86 du flux de tête 80 est injectée dans le flux gazeux 36 en amont de son introduction dans l'unité de compression.

En variante, et lorsque l'unité de compression 24 comprend plusieurs étages de compression, la première partie 86 du flux de tête 80 est injectée dans le flux gazeux 36 en amont de l'un des étages de compression. En particulier, la première partie 86 peut être injectée en amont de tous les étages de compression ou entre deux étages de compression successifs, typiquement entre la sortie d'un étage de compression et l'entrée de l'étage de compression suivant.

La deuxième partie 88 du flux de tête 80 est injectée dans le courant résiduel industriel 16, avant son introduction dans l'unité de captage 22.

De préférence, au moins 50% du flux de tête gazeux 80 est recyclé dans le flux gazeux 36 riche en dioxyde de carbone, de préférence de 70% à 95 %.

De préférence, au plus 30% du flux de tête gazeux 80 est recyclé dans le courant industriel 16.

La réintroduction du flux de tête 80 dans l'installation 10 permet de récupérer le dioxyde de carbone présent le flux de tête 80. Il permet en particulier d'augmenter le taux de récupération du dioxyde de carbone.

Le recyclage de la deuxième partie 88 du flux de tête gazeux 80 vers l'unité de captage 22 permet quant à elle de prévenir et/ou d'éviter l'accumulation d'impuretés incondensables, essentiellement le dioxygène et le diazote, dans l'installation 10, notamment au niveau de l'unité de compression 24, de l'unité de séchage 26, de l'unité de refroidissement et de liquéfaction 28 ou encore de la colonne de détente 34.

En particulier, au cours du procédé de l'invention, les impuretés incondensables, majoritairement constituées de dioxyde de carbone, sont concentrées dans le flux de tête gazeux 80. Afin d'éviter l'accumulation des impuretés incondensables dans le système, une petite partie du flux de tête gazeux est ensuite injectée dans l'unité de captage 22 via la deuxième partie 88 du flux de tête gazeux 80, tandis que la majorité est recyclée dans le flux gazeux 36 via la première partie 86 du flux de tête gazeux 80. Les impuretés incondensables renvoyées dans l'unité de captage 22 sont alors séparées du dioxyde de carbone au niveau de l'absorbeur 42 et éliminées du procédé dans le courant 14 d'effluents. Le procédé de l'invention permet ainsi de prévenir et/ou d'éviter l'accumulation d'impuretés incondensables, essentiellement de dioxygène et de diazote, dans l'installation 10, sans nécessiter la purge d'une partie du dioxyde de carbone.

Des installations alternatives ainsi que les procédés associés vont maintenant être décrits en regard des figures 2, 3, 4 et 5. Seules les différences par rapport à l'installation et au procédé préalablement décrits sont mentionnées par la suite.

Une installation 110 selon un second mode de réalisation de l'invention est illustrée schématiquement sur la figure 2.

Selon ce second mode de réalisation, le septième échangeur thermique 89 est intégré dans la chaine principale de l'installation 110 de sorte que le courant liquide 90 prélevé en pied de la colonne de détente 34 est réchauffé, au niveau du septième échangeur thermique 89, par échange thermique avec le flux liquéfié et sous-refroidi 30.

Le septième échangeur thermique 89 comprend ainsi une entrée 112 d'introduction du flux liquéfié et sous-refroidi 30, ladite entrée 112 étant reliée à la sortie de récupération 70 de l'unité de refroidissement et de liquéfaction 28

Le septième échangeur thermique 89 comprend également une sortie 114 de récupération d'un flux sous-refroidi secondaire 116 obtenu par refroidissement du flux liquéfié et sous-refroidi 30.

La sortie 114 est reliée à la vanne 32 de sorte que le flux sous-refroidi secondaire 116 soit détendu avant d'être introduit dans la colonne de détente 34, par analogie avec ce qui a été décrit ci-dessus en référence à la figure 1.

Ce second mode de réalisation est avantageux en ce qu'il permet d'annuler le besoin d'énergie extérieure pour le rebouillage du courant liquide 90, l'énergie étant apportée par intégration thermique. Il permet ainsi de limiter les coûts d'exploitation du procédé selon l'invention.

Sur les figures 3, 4 et 5, le septième échangeur thermique 89 est intégré dans la chaine principale de l'installation par analogie avec l'installation 110 représentée sur la figure 2. En variante, et de manière équivalente, le septième échangeur thermique 89 peut consister en un échangeur thermique externe semblable à celui de l'installation 10 représentée sur la figure 1 décrite ci-dessus.

Une installation 210 selon un troisième mode de réalisation de l'invention est illustrée schématiquement sur la figure 3.

Selon ce troisième mode de réalisation, la sortie 70 de récupération du flux liquéfié et sous-refroidi 30 est reliée d'une part à l'entrée 112 d'introduction du septième échangeur 89 (ou directement à la vanne 32 dans le cas où le septième échangeur 89 est un échangeur externe) et d'autre part à une vanne 118 de sorte que le second flux liquéfié et sous-refroidi 30 sortant du sixième échangeur 74 soit divisé en deux sous-flux 120, 122.

Un premier sous-flux 120 alimente le septième échangeur 89 (ou directement la vanne 32) et subit ensuite l'ensemble des étapes décrites ci-dessus dans le contexte du premier mode de réalisation.

Le premier sous-flux 120 représente au moins 70% du flux liquéfié et sous-refroidi 30.

Le second sous-flux 122 est ensuite détendu par passage dans la vanne 118 jusqu'à une pression correspondant à la pression du flux gazeux 36 en amont de l'un des étages de compression de l'unité de compression 24. Plus préférentiellement, le second sous-flux 122 est détendu jusqu'à une pression correspondant à celle du flux entrant dans l'étage de compression au niveau duquel la première partie 86 du flux de tête est injectée.

Le second sous-flux 122 détendu présente ainsi une température inférieure à -25°C et notamment comprise entre -60 °C et -30 °C.

Le second sous-flux 122 est ensuite chauffé dans le sixième échangeur thermique 74 par échange thermique avec le flux intermédiaire liquéfié 69.

De préférence, l'intégralité du second sous-flux 122 est vaporisée au niveau du sixième échangeur thermique 74.

Le second sous-flux 122 récupéré en sortie du sixième échangeur thermique 74 est ensuite injecté dans le flux gazeux 36 riche en dioxyde de carbone pour y être recyclé.

Le flux de tête gazeux 80 est également introduit dans le sixième échangeur thermique 74 pour y être chauffé par échange thermique avec le flux intermédiaire liquéfié 69, avant d'être séparé en les deux parties 86, 88.

De préférence, le second sous-flux 122 et le flux de tête gazeux 80 sont introduits dans le sixième échangeur thermique 74 sous la forme de flux distincts. En particulier, le second sous-flux 122 et le flux de tête gazeux 80 ne sont pas mélangés ni avant ni à l'intérieur du sixième échangeur thermique 74.

Ce troisième mode de réalisation est avantageux en ce qu'il permet de réduire le besoin de fluide réfrigérant externe nécessaire pour le fonctionnement du cinquième échangeur 72. Il permet ainsi de limiter les coûts d'exploitation du procédé selon l'invention.

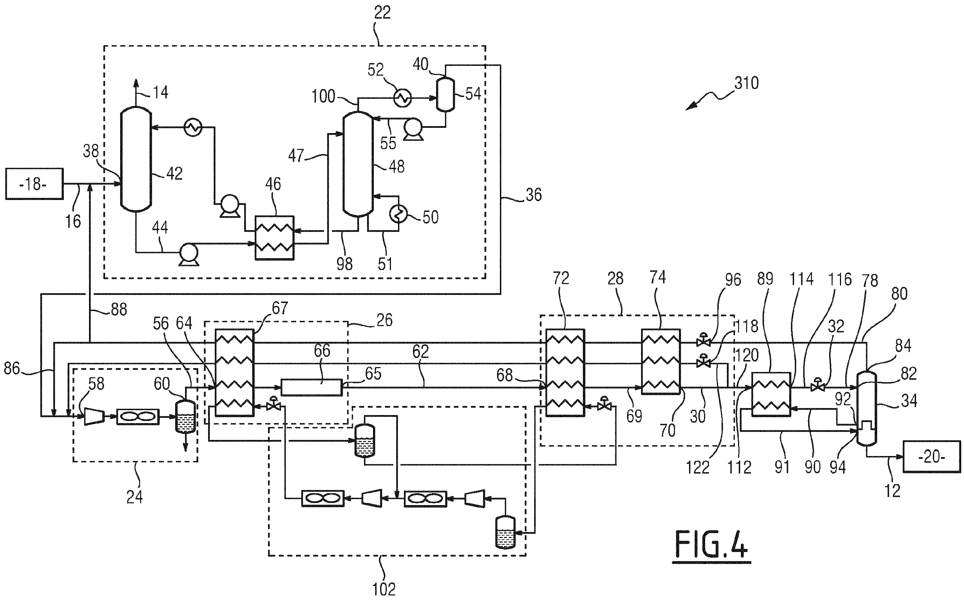

Une installation 310 selon un quatrième mode de réalisation de l'invention est illustrée schématiquement sur la figure 4.

L'installation 310 est analogue à l'installation 210 du second mode de réalisation à l'exception que directement après avoir été chauffés dans le sixième échangeur thermique 74, le flux de tête gazeux 80 et le second sous-flux 122 sont immédiatement introduits dans le cinquième échangeur thermique 72 dans lequel ils sont à nouveau chauffés par échange thermique avec le flux gazeux sec 62.

Le flux de tête gazeux 80 et le second sous-flux 122 sont ensuite introduits dans le quatrième échangeur thermique 67 dans lequel ils sont à nouveau chauffés par échange thermique cette fois-ci avec le flux gazeux comprimé 56.

De préférence, le second sous-flux 122 et le flux de tête gazeux 80 sont introduits dans le cinquième échangeur thermique 72 et dans le quatrième échangeur thermique 67 sous la forme de flux distincts. En particulier, le second sous-flux 122 et le flux de tête gazeux 80 ne sont pas mélangés ni avant ni à l'intérieur du cinquième échangeur thermique 72 et/ou du quatrième échangeur thermique 67.

Le flux de tête gazeux 80 réchauffé récupéré en sortie du quatrième échangeur thermique 67 est ensuite divisé en deux parties 86, 88 qui sont recyclées dans l'installation 310 par analogie avec les procédés décrits ci-dessus.

Le second sous-flux 122 est ensuite intégralement recyclé dans l'installation 310 par injection dans le flux gazeux 36 riche en dioxyde de carbone, en amont de l'un des étages de compression de l'unité de compression 24.

Ce quatrième mode de réalisation est avantageux en ce qu'il permet de réduire davantage le besoin de fluide réfrigérant externe, notamment pour le fonctionnement du quatrième échangeur thermique 67 et du cinquième échangeur thermique 72. Il permet ainsi de limiter les coûts d'exploitation du procédé selon l'invention.

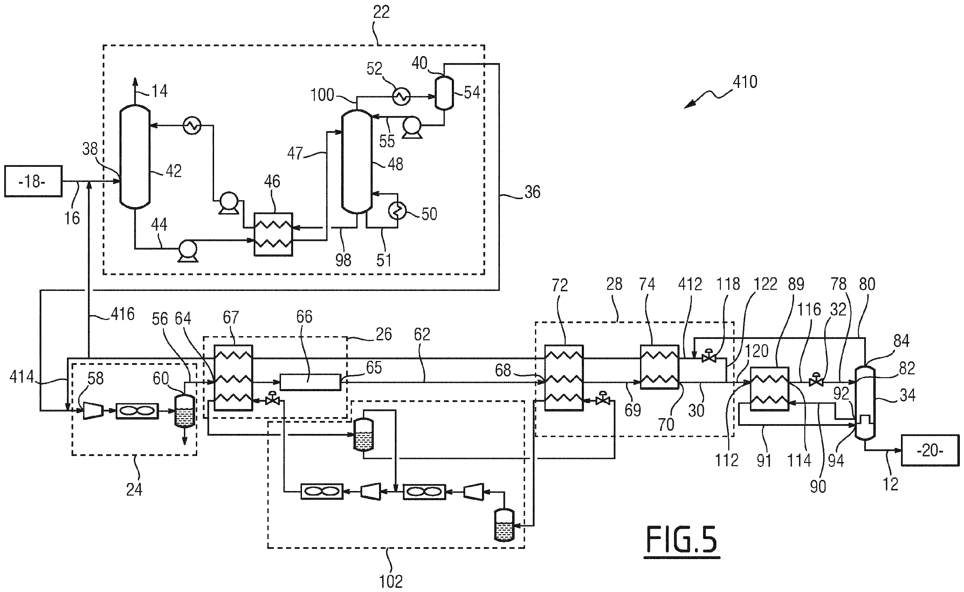

Une installation 410 selon un cinquième mode de réalisation de l'invention est illustrée schématiquement sur la figure 5.

L'installation 410 est analogue à l'installation 310 du quatrième mode de réalisation représenté sur la figure 4 à l'exception que le flux de tête gazeux 80 récupéré en sortie 84 de la colonne de détente 34 est entièrement injecté dans le second sous-flux 122, en sortie de la vanne 118, pour former un flux commun 412.

Le flux commun 412 est ensuite réchauffé par passage successif dans le sixième échangeur 74, le cinquième échangeur 72 et le quatrième échangeur 67 par analogie avec le quatrième mode de réalisation.

Après passage dans le sixième échangeur 74, le cinquième échangeur 72 et le quatrième échangeur 67, le flux commun 412 est divisé en deux parties 414, 416.

La première partie 414 du flux commun 412 est injectée dans le flux gazeux 36 riche en dioxyde de carbone, en amont de l'un des étages de compression de l'unité de compression 24.

La deuxième partie 416 du flux commun 412 réchauffé est injectée dans le gaz résiduel 16 industriel, avant son introduction dans l'unité de captage 22.

Ce cinquième mode de réalisation est avantageux en ce qu'il permet de réduire les coûts d'investissement associés au procédé de l'invention.

L'installation et le procédé selon l'invention permettent donc la désoxygénation du CO₂ sans nécessiter l'installation d'un réacteur de désoxygénation ou d'une configuration complexe dédiée à la purge d'incondensables ou d'un condenseur à basse température. Ceci offre un avantage concurrentiel à l'invention en termes de dépenses en capital (CAPEX).

Cette désoxygénation du CO₂ est obtenue de manière efficace sans aucune exigence de catalyseur, ou d'utilités externes comme l'hydrogène ou le réfrigérant froid. Ceci offre un avantage concurrentiel à l'invention en termes de coûts d'opérations (OPEX). Les émissions de CO₂ associées sont également réduites, ce qui est favorable pour ce type de procédé dont l'objectif est de capter le CO₂ pour sa séquestration.

Etant donné qu'aucun catalyseur n'est utilisé, le procédé selon l'invention n'est pas sensible aux contaminants soufrés.

Aucun hydrogène sous pression n'est nécessaire dans le procédé. Cela réduit considérablement les risques en termes de contraintes de sûreté pour l'installation.

Par ailleurs, aucune purge directe à l'atmosphère d'un flux riche en CO₂ n'est nécessaire pour éviter l'accumulation d'incondensables (oxygène par exemple), qui conduirait à une montée en pression. Par conséquent, le taux de récupération de CO₂ est maximisé.

## Revendications

1. Procédé de récupération d'un courant (12) de dioxyde de carbone liquéfié à partir d'un gaz résiduel (16) industriel, comprenant les étapes suivantes :
- introduction du gaz résiduel (16) industriel dans une unité de captage (22) de dioxyde de carbone pour former un flux gazeux (36) riche en dioxyde de carbone et un courant (14) d'effluent pauvre en dioxyde de carbone ;
- compression du flux gazeux (36) dans un ou plusieurs étage(s) de compression pour former un flux gazeux comprimé (56) ;
- séchage du flux gazeux comprimé (56) pour former un flux gazeux sec (62) ;
- refroidissement, liquéfaction et sous-refroidissement du flux gazeux sec (62) pour former un flux liquéfié et sous-refroidi (30),
- détente partielle du flux liquéfié et sous-refroidi (30) pour former un flux détendu (78) comprenant une fraction liquide et une fraction gazeuse,
- introduction du flux détendu (78) dans une colonne de détente (34) pour former un flux de tête gazeux (80) et récupérer, en pied de colonne, le courant (12) de dioxyde de carbone liquéfié,
**caractérisé en ce qu'**une première partie (86) du flux de tête gazeux (80) est injectée dans le gaz résiduel (16) industriel, avant son introduction dans l'unité de captage (22), et **en ce qu'**une deuxième partie (88) du flux de tête gazeux (80) est injectée dans le flux gazeux (36) riche en dioxyde de carbone, en amont de l'un des étages de compression, et **en ce qu'**un courant liquide (90) soutiré en pied de la colonne de détente (34) est chauffé pour former un flux rebouilli (91), ledit flux rebouilli (91) étant ensuite injecté dans la colonne de détente (34).

2. Procédé selon la revendication 1, dans lequel le gaz résiduel (16) industriel contient moins de 50 % en masse, de préférence moins de 40 % en masse, plus préférentiellement de 2 à 30% en masse, de dioxyde de carbone.

3. Procédé selon la revendication 1 ou la revendication 2, dans lequel le flux gazeux (36) riche en dioxyde de carbone présente une teneur massique en dioxyde de carbone supérieure à 90% en masse, de préférence supérieure à 95% en masse.

4. Procédé selon l'une quelconque des revendications 1 à 3, dans lequel la première partie (86) du flux de tête gazeux (80) représente au moins 50%, de préférence de 70 % à 95 %, du flux de tête gazeux (80).

5. Procédé selon l'une quelconque des revendications 1 à 4, dans lequel le courant liquide (90) est chauffé par échange thermique avec le flux liquéfié et sous-refroidi (30).

6. Procédé selon l'une quelconque des revendications précédentes, dans lequel, avant l'étape de détente partielle, le flux liquéfié et sous-refroidi (30) est séparé en un premier sous-flux (120) et un second sous-flux (122), le premier sous-flux (120) étant ensuite partiellement détendu et introduit dans la colonne de détente (34) et le second sous-flux (122) étant placé en relation d'échange thermique avec le flux gazeux sec (62).

7. Procédé selon la revendication 6, dans lequel le flux de tête gazeux (80) est placé en relation d'échange thermique avec le flux gazeux sec (62).

8. Procédé selon l'une quelconque des revendications 6 à 8, dans lequel le flux de tête gazeux (80) est mélangé avec le second sous-flux (122) pour former un flux commun (412), le flux commun (412) étant ensuite placé en relation d'échange thermique avec le flux gazeux sec (62) et/ou avec le flux gazeux comprimé (56), ledit flux commun (412) étant ensuite divisé en une première partie (414) qui est injectée dans le flux gazeux (36), en amont de l'un des étages de compression, et une deuxième partie (416) qui est injectée dans le courant résiduel (16) industriel.

9. Procédé selon l'une quelconque des revendications 1 à 8, le procédé étant dépourvu d'une étape de désoxygénation catalytique, notamment entre l'étape de compression et l'étape de séchage.

10. Procédé selon l'une quelconque des revendications 1 à 10, dans lequel, au niveau de l'unité de captage (22), le gaz résiduel (16) industriel est mis en contact avec un solvant apte à absorber le dioxyde de carbone.

11. Procédé selon l'une quelconque des revendications 1 à 11, dans lequel la deuxième partie (88, 416) du flux de tête gazeux (80) présente une teneur en dioxygène O₂ de 0,1 à 1% en masse.

12. Installation (10, 110, 210, 310, 410) de récupération d'un courant (12) de dioxyde de carbone liquéfié à partir d'un gaz résiduel (16) industriel, comprenant :
- une unité de captage (22) de dioxyde de carbone destinée à former un flux gazeux (36) riche en dioxyde de carbone et un courant (14) d'effluent pauvre en dioxyde de carbone, l'unité de captage (22) comportant une entrée (38) d'introduction du gaz résiduel (16) industriel,
- une unité de compression (24) destinée à former un flux gazeux comprimé (56) comprenant une entrée (58) d'introduction du flux gazeux (36) riche en dioxyde de carbone,
- une unité de séchage (26) destinée à former un flux gazeux sec (62), comprenant une entrée (64) d'introduction du flux gazeux comprimé (56),
- une unité de refroidissement et de liquéfaction (28) destinée à refroidir, liquéfier et sous-refroidir le flux gazeux sec (62) pour former un flux liquéfié et sous-refroidi (30), l'unité de refroidissement et de liquéfaction (28) comprenant une entrée (68) d'introduction du flux gazeux sec (62),
- une vanne (32) destinée à détendre partiellement le flux liquéfié et sous-refroidi (30) pour former un flux détendu (78) comprenant une fraction liquide et une fraction gazeuse,
- une colonne de détente (34) destinée à former un flux de tête gazeux (80) et, en pied de colonne, le courant (12) de dioxyde de carbone liquéfié, la colonne de détente (34) comprenant une entrée (82) d'introduction du flux détendu (78) et une sortie (84) de récupération du flux de tête gazeux (80),
**caractérisée en ce que** la sortie (84) de la colonne de détente (34) est reliée à l'entrée (38) de l'unité (22) de captage de dioxyde de carbone et à l'entrée (58) de l'unité de compression (24) de sorte qu'une première partie (86) du flux de tête gazeux (80) soit injectée dans le flux gazeux (36) riche en dioxyde de carbone et qu'une seconde partie (88) du flux de tête gazeux (80) soit injectée dans le gaz résiduel (16) industriel, et **en ce que** la colonne de détente (34) est reliée à un septième échangeur thermique (89) destiné à former un flux rebouilli (91).

13. Installation (110, 210, 310, 410) selon la revendication 12, dans laquelle le septième échangeur thermique (89) comprend en outre une entrée (112) d'introduction du flux liquéfié et sous-refroidi (30) et une sortie (114) de récupération reliée à la vanne (32), de sorte que le flux liquéfié et sous-refroidi (30) subisse une étape de refroidissement supplémentaire par échange thermique avec le flux rebouilli (91).
